# EUROPÄISCHE PATENTANMELDUNG

(11) **EP 1 589 538 A1**
(43) Veröffentlichungstag der Anmeldung: **26.10.2005**
(21) Anmeldenummer: 05008155.3
(22) Anmeldetag: 14.04.2005
(51) Int. Cl.: G11B 33/04

(54) **Flächiger CD-Träger**

(30) Priorität: 22.04.2004 DE 202004006539 U
(71) Anmelder: Achilles Präsentationsprodukte GmbH, 29227 Celle (DE)
(72) Erfinder: Carsten, Conrad, 29313 Hambühren (DE)
(74) Vertreter: Lins, Edgar

(57) **Zusammenfassung**

Ein flächiger CD-Träger mit einer Vorderseite und einer Rückseite und mit einem Stanzschnitt (15, 16) zur Bildung einer Halterung für eine flächige CD (21), deren Fläche durch einen Außendurchmesser und eine zentrale runde Öffnung (22) mit einem Innendurchmesser begrenzt ist, ermöglicht eine ästhetisch ansprechende, stabile und eine Mehrfachbenutzung erlaubende Befestigung der CD an dem Träger durch
einen ersten Stanzschnitt (15) zum Einstecken der CD (21) so, dass ein kleinerer Flächenanteil der CD (21) auf der Rückseite des Trägers liegt, wobei der erste Stanzschnitt (15) eine den Einsteckvorgang begrenzende Länge aufweist,
und einen zweiten Stanzschnitt (16), mit dem ein aus der Ebene des flächigen Trägers zur Vorderseite herausbiegbarer Steg (17) freigestanzt ist, der ein mit dem Träger verbundenes Ende und ein freies Ende (18) aufweist, dessen freies Ende (18) zum ersten Stanzschnitt (15) hin gerichtet ist und der zum Durchragen durch die zentrale Öffnung (22) und überragen eines Teils der Fläche der in den ersten Stanzschnitt (15) eingesteckten CD (21) in Richtung auf den ersten Stanzschnitt (15) ausgebildet und positioniert ist.

## Beschreibung

Die Erfindung betrifft einen flächigen CD-Träger mit einer Vorderseite und einer Rückseite und mit einem Stanzschnitt zur Bildung einer Halterung für eine flächige CD, deren Fläche durch einen Außendurchmesser und eine zentrale runde Öffnung mit einem Innendurchmesser begrenzt ist

Um die beschriebene Seite einer CD zu schützen, werden CDs in speziellen Hüllen gelagert, transportiert und verkauft. Üblich sind meist zweiteilige Kunststoffhüllen mit einem Bodenteil und einem gelenkig mit dem Bodenteil verbundenen Deckelteil, wobei das Bodenteil mit mittig sternförmig angeordneten Rasthaken versehen ist, die in die zentrale runde Öffnung der CD eingedrückt werden und den Rand dieser Öffnung rastend übergreifen.

Es ist beispielsweise durch die DE 195 29 393 A1 bekannt, eine derartige CD-Hülle auch aus Karton durch Falten herzustellen, wobei ein Bodenteil des Kartonzuschnitts mit einem Stanzschnitt versehen ist, durch den eine Zunge freigestanzt wird, die durch die zentrale Öffnung der CD gesteckt und auf der Oberseite der CD umgeboden wird. Durch eine in die CD-Hülle eingefaltete Lasche wird die durch die zentrale Öffnung gesteckte Zunge gegen die CD-Oberseite gedrückt.

Während die genannten CD-Hüllen im Wesentlichen als Verkaufsvehikel für die CDs dienen, besteht häufig der Bedarf, Verbraucher mit bestimmten Informationen zu versehen, die durch eine ggf. interaktive Präsentation auf einer CD-ROM ergänzt werden oder für die eine CD als Zugabe zu betrachten ist. Dabei besteht der Bedarf, die CD, die eine Audio-, Video- oder Daten-CD sein kann, in geeigneter Form mit einer Broschüre, einem Buch oder einer Angebots- oder Präsentationsmappe zu verbinden.

Die einfachste Art einer derartigen Verbindung besteht in dem Einkleben einer einseitig offenen Tasche, in die die CD einsteckbar ist. Diese Lösung ist einerseits aufwändig und andererseits optisch nicht attraktiv. Der Aufwand wird noch dadurch vergrößert, dass zur Verhinderung des Herausfallens der CD aus der Tasche eine Deckelklappe vorgesehen wird, die ggf. über einen Klebpunkt mit der Tasche verbindbar sein muss.

Um den Aufwand für das Aufkleben einer Tasche zu vermeiden, ist daher auch für derartige flächige CD-Träger auf den Gedanken der handelsüblichen CD-Hüllen zurückgegriffen worden, die CD im Bereich der zentralen Öffnung zu halten.

So ist es beispielsweise durch DE 298 24 698 U1 bekannt, aus einem Deckel durch einen Einschnitt einen aus der Ebene des Deckels ausbiegbaren Steg mit einer hinterschnittenen Pfeilform zu bilden. Die größte Breite des Steges ist dabei größer als der Innendurchmesser der zentralen Öffnung der CD. Hierdurch wird die CD auf der Oberseite des Deckels gehalten, jedoch aufgrund der Fertigungstoleranzen nicht in einer fixierten Position, sondern um ein gewisses Maß in alle Richtungen beweglich. Darüber hinaus ist das Lösen der CD aus dieser Befestigung problematisch, da der pfeilförmige Steg seitlich zusammengedrückt werden muss, um das Entnehmen der CD zu ermöglichen. Hieraus ergeben sich sehr spezielle Anforderungen an das verwendete Material das vielfach elastisch verformbar sein muss, um ggf. zahlreiche Entnahmen und Wiederaufnahmen der CD zu ermöglichen. Mit einem derartigen Material kann eine zusätzliche Fixierung der CD noch dadurch erreicht werden, dass der aus der Ebene herausgebogene Steg aufgrund seiner Rückstellkräfte eine gewisse Vorspannung auf die Oberseite der CD ausübt und so die CD gegen den als Deckel ausgebildeten flächigen Träger ausübt. Hierfür kommt lediglich ein spezielles Plastikmaterial in Frage. Da die CD - zumindest durch äußere Einwirkungen - relativ zu dem flächigen Träger bewegbar ist und ggf. mit der beschriebenen Unterseite aufgrund der Vorspannung des Steges gegen den flächigen Träger gedrückt wird, ist nach einer längeren Benutzung eine Beeinträchtigung der Abspielbarkeit der CD nicht ausgeschlossen. Darüber hinaus ist die CD aufgrund der Befestigung über die zentrale Öffnung leicht drehbar, was insbesondere den mit dem CD-Aufdruck auf der Oberseite erzeugbaren ästhetischen Eindruck in einer Präsentationsmappe stören kann.

Ähnliche Nachteile ergeben sich aus einer durch JP 1 0167368 A bekannten Lösung, bei der aus dem flächigen Träger ein Steg freigestanzt wird, der zwei Seitenkanten aufweist, die eine Länge vom Außenumfang der CD bis zur zentralen Öffnung aufweisen. Der Steg weist an seinem freien Ende eine Vergrößerung seiner Breite auf. Der Steg ist dafür vorgesehen, auf der bespielten Unterseite der CD anzuliegen und im Bereich seiner geringsten Breite durch die zentrale Öffnung von der Unterseite zur Oberseite der CD gesteckt zu werden, wobei das verbreiterte Ende des Stegs über der Vorderseite der CD liegt. Da die CD jedoch insgesamt auf der Rückseite des Trägers angeordnet ist, ist sie von der Vorderseite des Trägers nur im Bereich der beiden trapezförmig aufeinander zulaufenden Schnittlinien der Stanzung des Steges sichtbar. Das verbreiterte Ende des Steges wird auf der Vorderseite des Trägers beispielsweise mit einem Klebestreifen befestigt, da andernfalls die CD auf der Rückseite des flächigen Trägers freibeweglich wäre. Die so gebildete Anordnung des Stanzschnittes ist bereits ästhetisch nicht ansprechend, wobei der ästhetische Eindruck noch stark durch das erforderliche Klebeband beeinträchtigt wird. Eine wiederholte Entnahme und Wiederaufnahme der CD in der Halterung erscheint regelmäßig nicht möglich.

Der Erfindung liegt die Aufgabe zugrunde, einen flächigen CD-Träger der eingangs erwähnten Art so auszubilden, dass ohne zusätzlichen Aufwand eine ästhetisch ansprechende, stabile und eine Mehrfachbenutzung erlaubende Befestigung der CD an dem Träger möglich ist.

Zur Lösung dieser Aufgabe ist der flächige CD-Träger der eingangs erwähnten Art erfindungsgemäß gekennzeichnet durch einen ersten Stanzschnitt zum Einstecken der CD so, dass ein kleiner Flächenanteil der CD auf der Rückseite des Trägers liegt, wobei der erste Stanzschnitt eine den Einsteckvorgang begrenzende Länge aufweist, und einen zweiten Stanzschnitt, mit dem ein aus der Ebene des flächigen Trägers zur Vorderseite herausbiegbarer Steg freigestanzt ist, der ein mit dem Träger verbundenes Ende und ein freies Ende aufweist, dessen freies Ende zum ersten Stanzschnitt hin gerichtet ist und der zum Durchragen durch die zentrale Öffnung und Überragen eines Teils der Fläche der in den ersten Stanzschnitt einsteckten CD in Richtung auf den ersten Stanzschnitt ausgebildet und positioniert ist.

Der erfindungsgemäße CD-Träger kombiniert somit eine Befestigung der CD an ihrer zentralen Öffnung mit der Befestigung an ihrem Umfang. Da der Steg über die Oberseite der CD in Richtung auf den ersten Stanzschnitt greift, begrenzt der Steg die Bewegung der in den ersten Stanzschnitt eingesteckten CD aus diesem Stanzschnitt heraus. Das mit dem Träger verbundende Ende des Steges kann so positioniert werden, dass für die in den ersten Stanzschnitt eingesteckte CD kaum ein Bewegungsspielraum in Einsteckrichtung verbleibt. Eine seitliche Bewegung der CD wird durch die Länge des ersten Stanzschnittes wirksam begrenzt bzw. unterbunden.

Aufgrund der Positionierung des Steges, der mit seinem freien Ende in Richtung des ersten Stanzschnittes zeigt, wird die CD durch das Zusammenspiel der beiden Halterungen sicher gehalten, ohne dass es hierzu besonderer Klemmwirkungen bedarf. Die Halterung findet daher nicht mit Hilfe von Rückstellkräften statt, die eine Vorspannung auf die CD ausüben und diese gegen eine Unterlage drücken, sondern lediglich aufgrund der konstruktiven Ausrichtung der ersten und zweiten Stanzschnitte.

Die Form des ersten Stanzschnittes ist beliebig, solange er ein Einstecken der CD mit einem von der Umfangskante ausgehenden Kreissektor ermöglicht. Der erste Stanzschnitt kann einen Gerade bilden, die senkrecht zu der Richtung des Steges steht. Es ist aber auch möglich, den ersten Stanzschnitt mit mehreren, beispielsweise zwei Abschnitten auszuführen, die schräg aufeinander zulaufen und das Einstecken der CD mit zwei Kreisabschnitten ermöglicht, die beidseitig einer Mittelachse für die Einsteckrichtung liegen. Eine derartige Befestigungsmöglichkeit ist beispielsweise für Visitenkarten o. ä. bekannt.

In einer bevorzugten Ausführungsform der Erfindung ist der erste Stanzschnitt durch einen Kreisabschnitt gebildet. Dieser Kreisabschnitt ist bezogen auf das freie Ende des Steges vorzugsweise konvex ausgebildet, kann aber auch konkav - mit einem größeren Radius als der Radius der CD - ausgebildet werden, wenn dies aus optischen Gründen bevorzugt ist. Die erfindungsgemäß bevorzugte konvexe Ausbildung des Kreisabschnitts ermöglicht, dass die beiden Stanzschnitte ineinander übergehen, sodass die CD bis nahe an die zentrale Öffnung in den ersten Stanzschnitt eingesteckt wird. Aus Handhabungsgründen überragt der Steg sinnvollerweise nur einen geringen Teil der Oberfläche der CD und erstreckt sich über deutlich weniger als 114, vorzugsweise weniger als 1/8 der radialen Länge der CD zwischen dem Innendurchmesser der zentralen Öffnung und dem Außendurchmesser.

Da der Steg erfindungsgemäße keine Rastfunktion ausüben muss, kann die Breite des Steges überall kleiner als der Durchmesser der zentralen Öffnung sein. Zur Erleichterung der Einführung des Steges in die zentrale Öffnung kann das freie Ende des Steges konisch verjüngt ausgebildet sein.

Der erfindungsgemäße flächige CD-Träger kann aus einem (starken) Papier oder Karton oder vorzugsweise aus einem flexiblen Kunststoff bestehen.

In einer besonders bevorzugten Ausführungsform der Erfindung ist der flächige CD-Träger an einer Umschlagklappe einer Präsentationsmappe ausgebildet, sodass die CD von dieser Umschlagklappe gehalten wird. Dabei ist es möglich, dass der Steg nahe einem freien Rand der Umschlagklappe freigestanzt ist, über den die CD herausragt. Dies hat den Vorteil, dass der Rand der Umschlagklappe im Bereich des Steges ergriffen und zur Entnahme oder Wiederaufnahme der CD nach hinten gebogen werden kann, wodurch der Steg aus der (nunmehr gebogenen) Ebene der Umschlagklappe herausragt und leicht in die zentrale Öffnung eingeführt bzw. aus ihr herausgezogen werden kann. In einer bevorzugten Ausführungsform ist der freie Rand der Umschlagklappe im Bereich des Steges mit einer angesetzten Lasche versehen, durch die das Umbiegen der Umschlagklappe nach hinten - also von der CD weg - erleichtert wird.

Die Erfindung soll im Folgenden anhand eines in der Zeichnung dargestellten Ausführungsbeispiels näher erläutert werden. Es zeigen:
- Figur 1: einen flach liegenden einteiligen Zuschnitt eines flächigen CD-Trägers in Form einer Präsentationsmappe
- Figur 2: eine Draufsicht auf die Präsentationsmappe gemäß Figur 1 im gefalteten, jedoch geöffneten Zustand der Präsentationsmappe, ohne eingesteckte CD
- Figur 3: Die Ansicht gemäß Figur 2 mit einer eingesteckten CD.

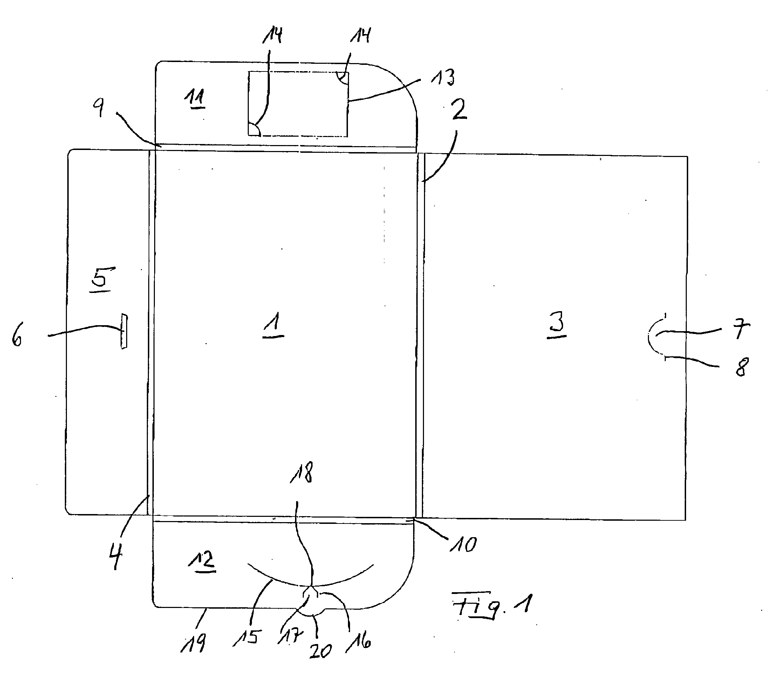

Der in Figur 1 dargestellte einteilige Zuschnitt dient zur Bildung einer verschließbaren Präsentationsmappe.

Die Größe der Präsentationsmappe wird durch ein rechteckiges Rückenteil 1 bestimmt, an das über eine Doppel-Falzrillung zwei ein gleichgroßes rechteckiges Deckelteil 3 angelenkt ist. Auf der gegenüberliegenden Seite des Rückteils 1 ist über eine weitere Doppel-Falzrillung 4 eine Verschlussklappe 5 mit einer geringeren Breite angelenkt. Die Verschlussklappe 5 weist auf mittiger Höhe einen ausgestanzten Schlitz 6 auf, zu der korrespondierend eine Verschlusslasche 7 in dem Deckelteil 3 durch eine Stanzlinie 8 freigestanzt ist.

An die beiden kurzen Seiten des Rückenteils 1 sind über Doppel-Falzrillungen 9, 10 eine obere Umschlagklappe 11 und eine untere Umschlagklappe 12 angelenkt. Diese Umschlagklappen 11, 12 haben eine rechteckige Grundform, sind jedoch an der zum Deckelteil 3 zeigenden Kante abgerundet.

Die obere Umschlagklappe 11 weist eine Einprägung 13, beispielsweise für eine Visitenkarte, auf, die an diagonal überliegenden Ecken jeweils mit einer kreisbogenförmigen Stanzlinie 14 zur Bildung von Einsteckschlitzen für Ecken einer Visitenkarte versehen sind.

Die untere Umschlagklappe 12 weist eine erste Stanzlinie 15 in Form eines Kreisbogenabschnitts auf, durch die ein Eirtsteckschlitz gebildet wird. Durch eine zweite Stanzlinie 16 ist ein Steg 17 freigestanzt, der an einem Ende mit der Umschlagklappe 12 verbunden ist und ein gegenüberliegendes freies Ende 18 aufweist. Die Stanzlinie 16 ist durch zwei trapezförmig aufeinander zulaufende geradlinige Abschnitt zum freien Ende 18 hin konisch verjüngt ausgebildet, wobei die beiden Stanzlinien 15, 16 an dem freien Ende 18 des Steges 17 ineinander übergehen.

An dem der Doppel-Falzrillung 10 gegenüberliegenden freien Rand 19 der unteren Umschlagklappe 12 ist im Bereich des Steges 17 eine abgerundet ausgebildete Betätigungslasche 20 angesetzt.

Die Darstellung der Figur 1 zeigt die Außenseiten von Rückenteil 1 und Deckelteil 3.

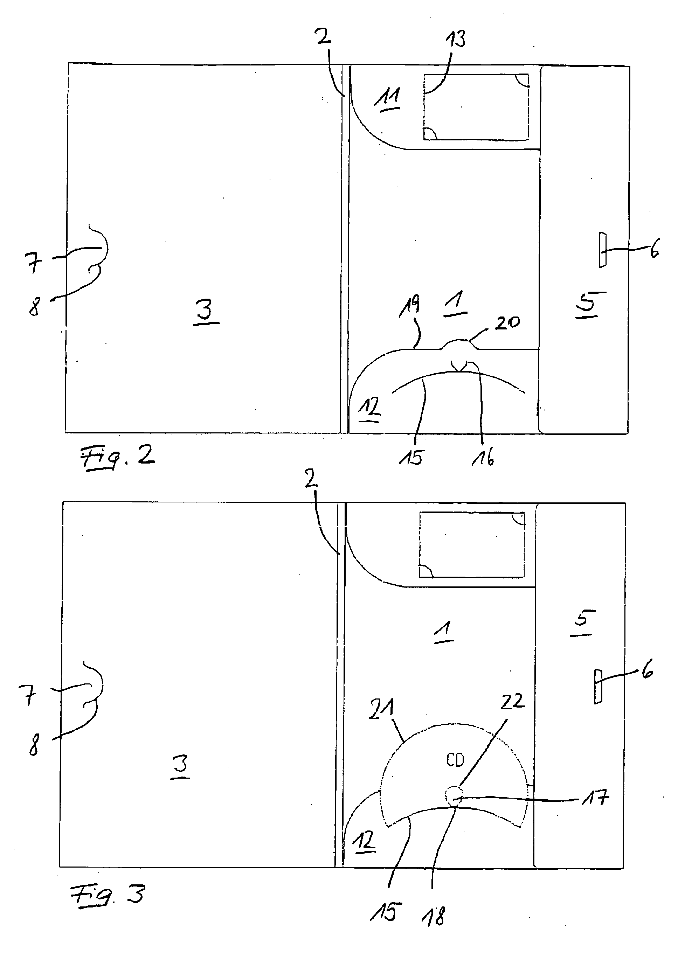

Figur 2 zeigt eine Ansicht auf die Innenseite der geöffneten Präsentationsmappe, die aus dem Zuschnitt gemäß Figur 1 gefaltet worden ist. Die Präsentationsmappe kann durch Umlegen des Deckelteils 3 auf das Rückenteil 1 geschlossen werden, wobei ein Verschluss durch das Eingreifen der Verschlusslasche 7 in den Schlitz 6 der Verschlussklappe 5 möglich ist. Es ist erkennbar, dass die Breite der Verschlussklappe 5 so gewählt ist, dass sie weder die Aufnahme einer Visitenkarte in dem Feld 13 noch einer CD in den Stanzschnitten 15, 16 stört.

Figur 3 zeigt eine in den ersten Stanzschnitt 15 eingesteckte CD 21, die eine zentrale Öffnung 22 mit einem kleinen Innendurchmesser aufweist. Die CD 21 ist somit mit einer ringförmigen Oberfläche versehen, die durch den Innendurchmesser der zentralen Öffnung 22 und den Außendurchmesser der CD 21 begrenzt ist. Der Stanzschnitt 15 ist - vom Steg 17 aus gesehen - konvex gebogen und weist eine wirksame Länge auf, die kleiner als der Außendurchmesser der CD 21 ist. Dadurch wird durch die Lange des ersten Stanzschnittes 15 die Einstecktiefe der CD 21 begrenzt. Ist die CD 21 in den ersten Stanzschnitt 15 eingesteckt, befindet sich der Steg 17 hinter der zentralen Öffnung 22 und kann, beispielsweise durch Biegen des freien Randes 19 der unteren Umschlagklappe 12 mittels der Betätigungslasche 20 nach hinten durch die zentrale Öffnung 22 hindurchgesteckt werden und überragt so mit seinem freien Ende 18 die Kante der zentralen Öffnung 22 und einen (geringen) Teil der Oberfläche der CD 21. Da der Steg 17 in die Einsteckrichtung der CD 21 in den ersten Stanzschnitt 15 zeigt, wirkt er für die Bewegung der CD entgegengesetzt zur Einsteckrichtung als Widerhaken, sodass die CD 21 sicher und weitgehend ohne Spiel an der unteren Umschlagklappe 12 gehalten wird.

Es ist ohne weiteres erkennbar, dass für die Halterung der CD 21 lediglich die geschickt angebrachten Stanzschnitte 15, 16 erforderlich sind, die keinen zusätzlichen Fertigungs-oder Materialaufwand bedingen.

## Patentansprüche

1. Flächiger CD-Träger mit einer Vorderseite und einer Rückseite und mit einem Stanzschnitt (15, 16) zur Bildung einer Halterung für eine flächige CD (21), deren Fläche durch einen Außendurchmesser und eine zentrale runde Öffnung (22) mit einem Innendurchmesser begrenzt ist, **gekennzeichnet durch** einen ersten Stanzschnitt (15) zum Einstecken der CD (21) so, dass ein kleinerer Flächenanteil der CD (21) auf der Rückseite des Trägers liegt, wobei der erste Stanzschnitt (15) eine den Einsteckvorgang begrenzende Länge aufweist,
und einen zweiten Stanzschnitt (16), mit dem ein aus der Ebene des flächigen Trägers zur Vorderseite herausbiegbarer Steg (17) freigestanzt ist, der ein mit dem Träger verbundenes Ende und ein freies Ende (18) aufweist, dessen freies Ende (18) zum ersten Stanzschnitt (15) hin gerichtet ist und der zum Durchragen **durch** die zentrale Öffnung (22) und überragen eines Teils der Fläche der in den ersten Stanzschnitt (15) eingesteckten CD (21) in Richtung auf den ersten Stanzschnitt (15) ausgebildet und positioniert ist.

2. Flächiger CD-Träger nach Anspruch 1, **dadurch gekennzeichnet, dass** der erste Stanzschnitt (15) einen Kreisabschnitt bildet.

3. Flächiger CD-Träger nach Anspruch 1 oder 2, **dadurch gekennzeichnet, dass** die beiden Stanzschnitte (15, 16) ineinander übergehen.

4. Flächiger CD-Träger nach einem der Ansprüche 1 bis 3, **dadurch gekennzeichnet, dass** die Breite des Stegs (17) kleiner als der Durchmesser der zentralen Öffnung (22) ist.

5. Flächiger CD-Träger nach einem der Ansprüche 1 bis 4, **dadurch gekennzeichnet, dass** das freie Ende (18) des Stegs (17) konisch verjüngt ausgebildet ist.

6. Flächiger CD-Träger nach einem der Ansprüche 1 bis 5, **dadurch gekennzeichnet, dass** der Träger aus einem flexiblen Kunststoff besteht.

7. Flächiger CD-Träger nach einem der Ansprüche 1 bis 5, **dadurch gekennzeichnet, dass** der Träger aus Papier oder Karton besteht.

8. Flächiger CD-Träger nach einem der Ansprüche 1 bis 7, **dadurch gekennzeichnet, dass** er an einer Umschlagklappe (12) einer Präsentationsmappe ausgebildet ist.

9. Flächiger CD-Träger nach einem der Ansprüche 1 bis 8, **dadurch gekennzeichnet, dass** der Steg (17) nahe einem freien Rand (19) des Trägers freigestanzt ist, über den die CD (21) hinausragt.

10. Flächiger CD-Träger nach Anspruch 9, **dadurch gekennzeichnet, dass** an dem freien Rand (19) im Bereich des Steges (17) ein Ansatz als Betätigungslasche (20) vorgesehen ist.
